# FASCICULE DE BREVET EUROPEEN

(11) **EP 3 710 280 B1**
(45) Date de publication et mention de la délivrance du brevet: **01.02.2023**
(21) Numéro de dépôt: 18816183.0
(22) Date de dépôt: 13.11.2018
(51) Int. Cl.: B43K 24/10, A45D 40/24, B25B 15/00, B43K 27/00, B43K 29/00, G06F 3/0354

(54) **DISPOSITIF MANUEL A DEUX TETES ESCAMOTABLES COMPRENANT UN UNIQUE MECANISME A UN SEUL RESSORT**
HANDGERÄT MIT ZWEI EINZIEHBAREN KÖPFEN MIT EINEM EINZIGEN MECHANISMUS MIT EINER EINZIGEN FEDER
MANUAL DEVICE WITH TWO RETRACTABLE HEADS COMPRISING A SINGLE MECHANISM WITH A SINGLE SPRING

(30) Priorité: 15.11.2017 FR 1760742
(43) Date de publication de la demande: 23.09.2020
(73) Titulaire: Société BIC, 92110 Clichy (FR)
(72) Inventeur: ROLION, Franck, 95270 Asniere Sur Oise (FR); FAGU, Ludovic, 92100 CLICHY (FR); MICHENAUD, Etienne, 92120 Montrouge (FR)
(74) Mandataire: Cabinet Beau de Loménie
(86) Numéro de dépôt international: PCT/FR2018/052823
(87) Numéro de publication internationale: WO 2019/097153

(56) Documents cités:
- WO-A1-2013/157674
- US-A- 3 250 254
- US-A1- 2011 292 003
- US-A1- 2015 022 503
- US-B1- 6 290 413
- US-B1- 6 361 232

## Description

### DOMAINE DE L'INVENTION

L'invention concerne un dispositif manuel longitudinal comprenant deux têtes qui sont chacune montée rétractable à une extrémité du dispositif manuel. Notamment, l'invention concerne des instruments d'écriture, mais pas uniquement.

### ETAT DE LA TECHNIQUE ANTERIEURE

Les dispositifs manuels à deux têtes rétractables connus ne sont généralement pas totalement satisfaisants du point de vue ergonomique, encombrement et fiabilité. Il existe donc un besoin en ce sens.

US 6 290 413 divulgue un dispositif manuel selon le préambule de la revendication 1.

### PRESENTATION DE L'INVENTION

Un mode de réalisation concerne un dispositif manuel, notamment un dispositif manuel d'écriture, selon la revendication 1, s'étendant selon une direction axiale, comprenant un carter présentant une première extrémité distale et une deuxième extrémité distale opposée à la première extrémité distale selon la direction axiale, une première tête mobile axialement entre une position d'utilisation dans laquelle la première tête fait saillie du carter depuis la première extrémité et une position escamotée dans laquelle la première tête est escamotée dans le carter, une deuxième tête mobile axialement entre une position d'utilisation dans laquelle la deuxième tête fait saillie du carter depuis la deuxième extrémité et une position escamotée dans laquelle la deuxième tête est escamotée dans le carter, et un unique mécanisme configuré pour amener la première tête et la deuxième tête depuis la position escamotée à la position d'utilisation et vice versa, le mécanisme comprenant au moins un chariot portant au moins une tête parmi la première tête et la deuxième tête et un unique ressort.

De manière générale, la direction axiale correspond à la direction de l'axe du carter, et une direction radiale est une direction perpendiculaire à l'axe du corps. On comprend qu'une direction azimutale ou circonférentielle correspond à la direction décrivant un anneau autour de la direction axiale. Par ailleurs, sauf précision contraire, les adjectifs « intérieur »/« extérieur » ou « interne »/« externe » sont utilisés en référence à une direction radiale de sorte qu'une partie intérieure (i.e. radialement intérieure) est plus proche de l'axe du corps qu'une partie extérieure (i.e. radialement extérieure).

On comprend que les têtes sont disposées à l'opposé l'une de l'autre selon la direction axiale au sein du dispositif manuel. Bien entendu, le carter peut être formé d'une seul et même pièce, ou bien de plusieurs pièces. Le carter forme la partie extérieure du dispositif manuel. Par exemple, dans le cas d'un instrument d'écriture, par exemple un stylo, le carter est formé par le fût extérieur du stylo.

On comprend que les têtes peuvent être formées par n'importe quel embout d'outil de dispositif manuel, par exemple un embout de clé, de tournevis, une lame, un poinçon, un corps d'écriture (pointe feutre, à bille ou autre équipée d'un réservoir d'encre, portemine, mine graphite, craie ou tout moyen permettant d'écrire sur un substrat), un pinceau, une gomme, un corps de friction, un élément (actif ou passif) configuré pour coopérer avec un écran tactile (par exemple un écran capacitif, résistif, inductif, infrarouge, optiques, électrostatique, etc.), un applicateur cosmétique (pinceau, crayon, brosse mascara, applicateur à bille, rouge à lèvres ou tout moyen d'application de cosmétique), etc.

Par « unique mécanisme » on entend que un ou plusieurs élément(s) permettant de faire rentrer/sortir la première tête et un ou plusieurs élément(s) permettant de faire rentrer/sortir la deuxième tête sont communs. En d'autres termes, l'unique mécanisme peut par exemple comprendre deux sous-mécanismes, à savoir un sous-mécanisme par tête, ces sous-mécanismes présentant au moins une pièce commune, par exemple, l'unique ressort. Selon une première variante, l'unique mécanisme permet de faire rentrer/sortir la première tête et la deuxième tête du carter, indépendamment l'une de l'autre. Selon une deuxième variante, l'unique mécanisme permet de déplacer les têtes simultanément, grâce à quoi une tête est rentrée pendant que l'autre est sortie et inversement, une position neutre dans laquelle les deux têtes sont escamotées pouvant bien évidement être prévue. Par la suite, et sauf indication contraire, par « le mécanisme » on entend « l'unique mécanisme ».

Le mécanisme comprend un unique chariot portant les deux têtes (par exemple dans ce cas de la deuxième variante ci-dessus) ou bien deux chariots, chaque chariot portant une tête distincte (par exemple dans ce cas de la première ou de la deuxième variante ci-dessus, mais pas nécessairement). Un unique ressort coopère avec le ou les chariots pour assister leurs mouvements lors du passage des têtes entre leurs positions d'utilisation et escamotée. Par la suite, et sauf indication contraire, par « le ressort » on entend « l'unique ressort ». Bien entendu, le mécanisme peut être de type quelconque, par exemple à cliquet, à rochet, à came hélicoïdale, une bague dentée formant came rotative, etc.

Ainsi, un tel dispositif manuel est ergonomique grâce à son unique mécanisme qui permet de rentrer/sortir les deux têtes. La présence d'un unique ressort au sein de l'unique mécanisme permet en outre d'assurer un faible encombrement du mécanisme et procure ainsi au dispositif manuel un encombrement réduit ayant des dimensions adaptables aux mains de la majorité des utilisateurs. Enfin, un nombre réduit de ressorts permet de fiabiliser, notamment vis-à-vis des blocages, de l'usure et de la fatigue, l'unique mécanisme, et donc le dispositif manuel.

Le dispositif manuel comprend deux chariots, le ressort s'étendant axialement entre les deux chariots et coopérant avec les deux chariots.

On comprend que le mécanisme comprend strictement deux chariots. Par exemple, le ressort est un ressort hélicoïdal (i.e. ressort à spires), par exemple de compression, s'étendant axialement entre les deux chariots et coopérant en butée avec chaque chariot.

Une telle configuration permet un certain couplage du mouvement axial des chariots tout en permettant une certaine liberté, liée à la déformabilité du ressort, quand à la position relative axiale des deux chariots. Ceci permet de réduire l'encombrement du mécanisme, en particulier l'encombrement radial à l'intérieur et à l'extérieur du ressort, et donc, par voie de conséquence, l'encombrement du dispositif manuel. Par exemple, ceci permet de loger une portion des têtes au voisinage du ressort.

Le mécanisme comprend un unique bouton latéral.

On comprend que l'unique bouton permet de faire rentrer/sortir les deux têtes. Un tel bouton est particulièrement ergonomique pour l'utilisateur et participe à l'optimisation de l'encombrement du mécanisme, et par voie de conséquence, de l'encombrement du dispositif manuel.

Le bouton coopère avec chacun des deux chariots.

On comprend que le bouton coopère directement ou indirectement (i.e. via une pièce intermédiaire) avec les chariots. Par exemple une pièce intermédiaire permet de faciliter le montage et optimise la répartition des efforts.

Le bouton est configuré pour entraîner un premier chariot parmi les deux chariots, en translation dans un premier sens axial tandis que le ressort tend à entraîner le premier chariot en translation dans un second sens axial, opposé au premier sens axial, et le bouton est configuré pour entraîner le deuxième chariot parmi les deux chariots, en translation dans le deuxième sens axial tandis que le ressort tend à entraîner le deuxième chariot en translation dans le premier sens axial.

En d'autres termes, le bouton est découplé, au moins sur une course axiale prédéterminée, selon le deuxième sens axial du premier chariot et découplé, au moins sur une course axiale prédéterminée, selon le premier sens axial du deuxième chariot. On comprend donc que le bouton permet d'entrainer le premier chariot uniquement selon le premier sens axial, et d'entrainer le deuxième chariot uniquement selon le deuxième sens axial. Par exemple, une telle configuration permet d'actionner le mécanisme pour faire rentrer/sortir les têtes indépendamment l'une de l'autre. Une telle configuration est particulièrement ergonomique pour l'utilisateur et participe à l'optimisation de l'encombrement du mécanisme, et par voie de conséquence, de l'encombrement du dispositif manuel

Dans certains modes de réalisation, le mécanisme comprend au moins une bague dentée formant came rotative coopérant avec le au moins un chariot.

Les mécanismes à bague dentée formant came rotative sont connus par ailleurs par l'homme du métier. De manière générale, lorsqu'on déplace le piston successivement dans un même sens, les dents d'une telle bague coopèrent alternativement avec des dents complémentaires d'un piston, grâce à quoi la bague retient alternativement le piston à deux positions axiales distinctes. Dans le contexte de la présente invention, le chariot forme le piston, la bague permettant de retenir alternativement le chariot dans une première position correspondant à la position escamotée de la tête portée par le chariot et dans une deuxième position correspondant à la position d'utilisation de ladite tête. Un tel mécanisme à bague dentée est particulièrement fiable tandis que la bague dentée permet d'optimiser l'encombrement radial du mécanisme, et donc, par voie de conséquence, l'encombrement du dispositif manuel. Par exemple, ceci permet à la tête de s'étendre axialement au travers de la bague.

Selon une variante (non revendiquée), le mécanisme est un mécanisme comprenant au moins un chemin de came hélicoïdal.

Les mécanismes à chemin de came hélicoïdal sont connus par ailleurs par l'homme du métier. Bien entendu, le chemin de came peut former qu'une portion d'hélicoïde. Une came suit le chemin de came hélicoïdal, grâce à quoi la came est déplacée entre une première et une deuxième position axiale. Par exemple, dans le contexte de la présente invention, la came est formée par le chariot, qui passe ainsi alternativement d'une première position correspondant à la position escamotée de la tête portée par le chariot à une deuxième position correspondant à la position d'utilisation de ladite tête. Un tel chemin de came hélicoïdal permet d'optimiser l'encombrement radial du mécanisme, et donc, par voie de conséquence, l'encombrement du dispositif manuel. Par exemple, le chemin de came s'étend sur la face interne du carter, ce qui libère de l'espace radial interne où une tête peut s'étendre.

Dans certains modes de réalisation, la première tête et la deuxième tête s'étendent chacune en partie sur une portion axiale commune du dispositif manuel.

On comprend donc qu'une portion axiale du carter reçoit une portion de la première tête et une portion de la deuxième tête. Une telle configuration permet d'optimiser l'encombrement global du dispositif manuel, tout en laissant suffisamment d'espace pour loger chacune des deux têtes.

Dans certains modes de réalisation, la première tête est un corps d'écriture tandis que la deuxième tête est un élément configuré pour coopérer avec un écran tactile.

Par la suite, et sauf indication contraire, par « élément pour écran tactile » ou « élément » on entend « élément configuré pour coopérer avec un écran tactile ». Bien entendu, un élément pour écran tactile peut être actif (i.e. équipé d'une alimentation électrique) ou passif (i.e. qui n'est pas équipé d'une alimentation électrique). Un tel élément est configuré pour interagir avec, c'est-à-dire être détecté par, un écran tactile.

Dans certains modes de réalisation, le dispositif manuel comprend un bouton configuré pour avec coopérer l'élément configuré pour coopérer avec un écran tactile uniquement lorsque l'élément est en position d'utilisation.

On comprend qu'un tel bouton permet de modifier un paramètre physique de l'élément. On comprend également que le bouton ne suit pas le mouvement de l'élément lors du passage de la position escamotée à la position d'utilisation, et inversement. Lorsque l'élément est en position d'utilisation, il est aligné avec une portion complémentaire du bouton, grâce à quoi l'utilisateur peut actionner le bouton pour modifier un paramètre physique de l'élément pour écran tactile. Une telle configuration permet d'optimiser l'encombrement du dispositif manuel.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un premier mode de réalisation du dispositif manuel,
- la figure 2 représente le premier mode de réalisation en éclaté,
- la figure 3 représente un deuxième mode de réalisation du dispositif manuel,
- la figure 4 représente le deuxième mode de réalisation en éclaté,
- la figure 5 représente un troisième mode de réalisation du dispositif manuel,
- la figure 6 représente une vue en coupe partielle du troisième mode de réalisation, selon le plan VI de la figure 5 et
- la figure 7 représente le troisième mode de réalisation en éclaté.

### DESCRIPTION DETAILLEE D'EXEMPLES DE REALISATION

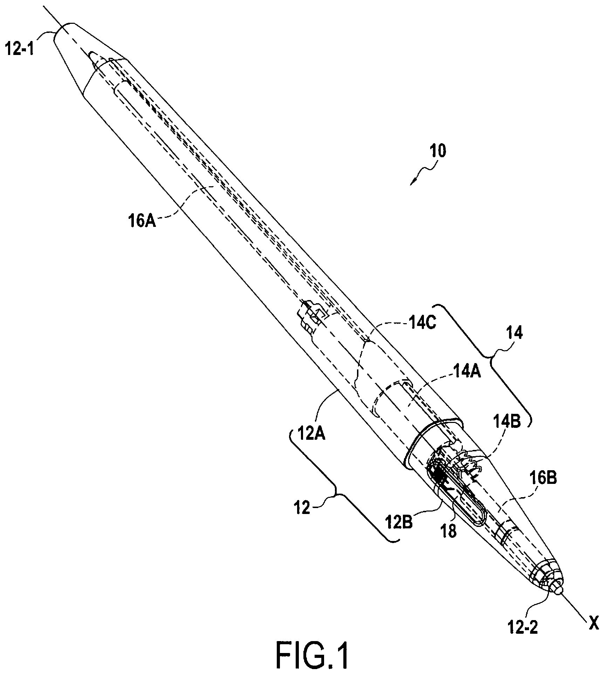

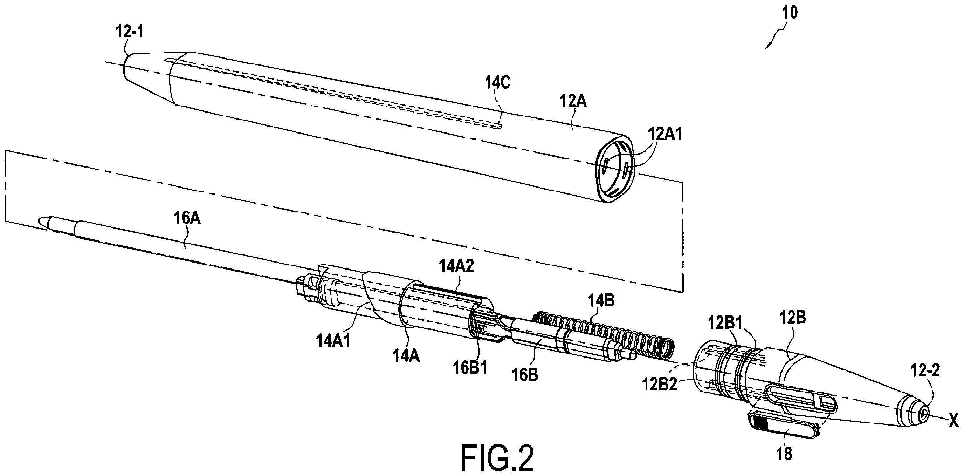

Un dispositif manuel 10 selon un premier mode de réalisation (non revendiquée) est décrit en référence aux figures 1 et 2. Le dispositif manuel 10 s'étend selon une direction axiale X, et comprend un carter 12 présentant une première extrémité distale 12-1 et une deuxième extrémité distale 12-2, opposée à la première extrémité distale 12-1 selon la direction axiale X.

Le carter 12 présente dans cet exemple une première partie de carter 12A présentant la première extrémité distale 12-1 et une deuxième partie de carter 12B présentant la deuxième extrémité distale 12-2. La première partie 12A et la deuxième partie 12B sont libres en rotation l'une par rapport à l'autre autour de la direction axiale X, et sont assemblées ensemble dans cet exemple par un système de clipsage comprenant des reliefs 12A1 et des nervures annulaires 12B1. Le carter 12 reçoit une première tête 16A, dans cet exemple un corps d'écriture à pointe à bille, et une deuxième tête 16B, dans cet exemple un élément actif configuré pour coopérer avec un écran tactile et un unique mécanisme 14 pour rentrer/sortir les têtes 16A, 16B du carter 12. Sur la figure 1, la première tête 16A est en position escamotée tandis que la deuxième tête 16B est en position d'utilisation.

Le mécanisme 14 comprend un unique chariot 14A et un unique ressort 14B. L'unique chariot 14A porte la première tête 16A et la deuxième tête 16B qui sont fixées, sur le chariot 14, dans cet exemple par emmanchement à force pour la première tête 16A et par clipsage pour la deuxième tête 16B. Les première et deuxième têtes 16A, 16B sont montées tête-bêche sur le chariot 14. La première tête 16A s'étend sur environ 95% de la longueur axiale du chariot 14 tandis que la deuxième tête 16B s'étend sur toute la longueur axiale du chariot 14. Ainsi, une fois montées au sein du dispositif manuel 10, la première tête 16A et la deuxième tête 16B s'étendent sur une portion axiale commune du dispositif manuel 10.

Le chariot 14A présente, sur sa surface extérieure, un chemin de came hélicoïdal 14A1 qui coopère avec une came formée par l'extrémité axiale 14C d'une nervure axiale formée sur la surface interne de la première partie de carter 12A. Le chariot 14A est libre en rotation autour de la direction axiale X par rapport à la première partie de carter 12A et coopère axialement en butée contre la came 14C. Le chariot 14A est couplé en rotation autour de la direction axiale X avec la deuxième partie de carter 12B, et est libre en translation selon la direction axiale X par rapport à la deuxième partie de carter 12B dans cet exemple grâce à deux nervures axiales 12B2 de la deuxième partie 12B chacune engagée dans une rainure 14A2 du chariot 14A. Ce système nervure 12B2 / rainure 14A2 forme une glissière guidant axialement le chariot 14A en translation selon la direction axiale X.

L'unique ressort 14B est un ressort hélicoïdal de compression qui s'étend axialement entre le chariot 14A et la deuxième partie de carter 12B, et qui est comprimé entre le chariot 14A et la deuxième partie de carter 12B. Ainsi le ressort 14B pousse, le chariot 14, et plus particulièrement le chemin de came 14A1, contre la came 14C. En faisant tourner la première partie de carter 12A par rapport à la deuxième partie de carter 12B autour de la direction axiale X, on entraine en rotation le chariot 14A par rapport à la première partie de carter 12A, grâce à quoi la came 14C se déplace le long du chemin de came 14A1 et la position axiale du chariot 14A est modifiée au sein du dispositif manuel 10, entrainant axialement simultanément la première tête 16A et la deuxième tête 16B entre leur positions respectives d'utilisation et escamotée. Ainsi, dans cet exemple le chemin de came 14A1 formant une boucle fermée sur elle-même, en faisant un tour complet en partant de la position représentée sur la figure 1, on entraine d'abord la deuxième tête 16B depuis la position d'utilisation vers la position escamotée, la première tête 16A se rapprochant de la première extrémité distale 12-1 mais restant en position escamotée (cette position correspondant à une position neutre où les deux tête étant escamotées). En continuant ce mouvement de rotation, on entraine ensuite la première tête 16A en position d'utilisation, la deuxième tête 16B se rapprochant de la première extrémité distale 12-1 tout en restant en position escamotée. En poursuivant encore ce mouvement de rotation, on ramène la première tête 16A en position escamotée depuis la position d'utilisation, tandis que la deuxième tête 16B se rapproche de la deuxième extrémité distale 12-2 mais reste en position escamotée (retour à la position neutre). Enfin, en finissant le tour, on amène la deuxième tête 16B depuis la position escamotée à la position d'utilisation tandis que la première tête 16A se rapproche de la deuxième extrémité distale 12-2 et reste escamotée, comme cela est représenté sur la figure 1. Bien entendu, on peut tourner la première partie 12A par rapport à la deuxième partie 12B dans un sens ou dans l'autre pour faire rentrer/sortir les première et deuxième têtes 16A, 16B.

On note que la deuxième partie de carter 12B présente un bouton radial 18 qui est aligné avec un bouton poussoir 16B1 de la deuxième tête 16B uniquement lorsque la deuxième tête 16B est en position d'utilisation. Dans cet exemple le bouton poussoir 16B1 active la deuxième tête 16B lorsqu'il est pressé et n'active pas la deuxième tête 16B sinon. Lorsque la deuxième tête 16B est en position d'utilisation, le bouton 18 et le bouton poussoir 16B1 sont alignés de sorte que lorsqu'on appui sur le bouton 18, on appuie indirectement sur le bouton poussoir 16B1, grâce à quoi on active la deuxième tête 16B. Bien entendu lorsque la deuxième tête 16B est escamotée, le bouton 18 et le bouton poussoir 16B1 ne sont pas alignés, et il n'est plus possible d'activer la deuxième tête 16B. Bien entendu, le bouton 18 peut permettre de modifier un paramètre physique de la deuxième tête 16B autre que son simple actionnement, que la tête soit active ou passive.

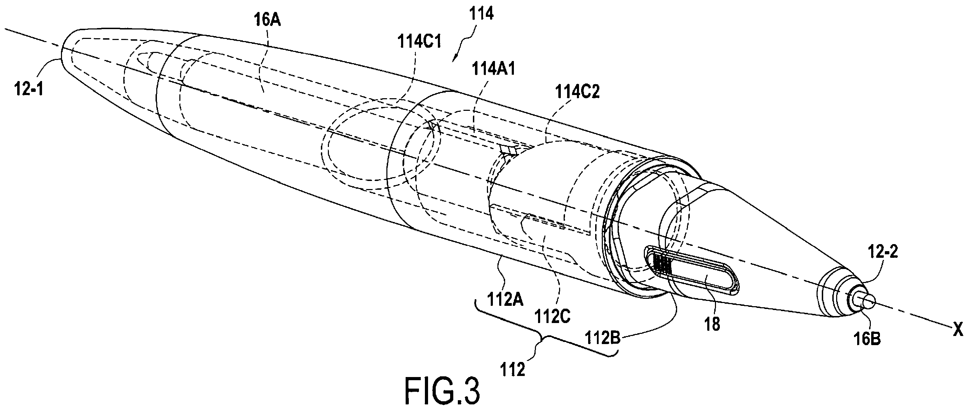

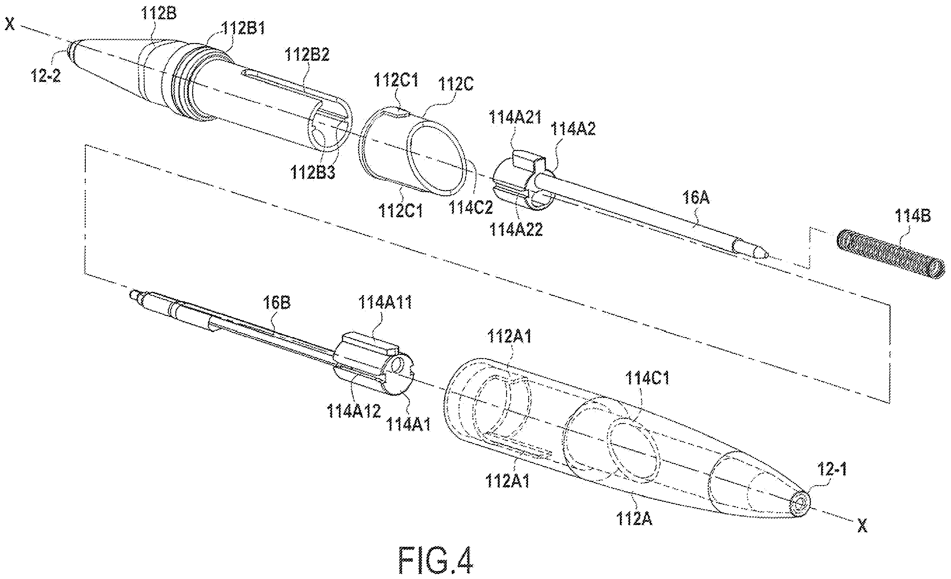

Un dispositif manuel 100 selon un deuxième mode de réalisation (non revendiquée) est décrit en référence aux figures 3 et 4. Ce deuxième mode de réalisation de dispositif manuel 100 est similaire au premier mode de réalisation de dispositif manuel 10, et diffère uniquement en ce qu'il comprend deux chariots au lieu d'un unique chariot, et en ce que le carter présente une structure différente. Les éléments en commun entre les premier et deuxième modes de réalisation présentent le même signe de référence et ne sont pas décrits à nouveau.

Sur la figure 3, la première tête 16A est escamotée dans le carter 112 tandis que la deuxième tête 16B est en position d'utilisation. Le carter 112 comprend dans cet exemple trois parties, à savoir une première partie 112A, une deuxième partie 112B et une troisième partie 112C emmanchée dans la première partie 112A. L'unique mécanisme 114 comprend un premier chariot 114A1, un deuxième chariot 114A2, un unique ressort 114B et deux chemins de cames hélicoïdaux 114C1 et 114C2, qui sont parallèles.

La première tête 16A et la deuxième tête 16B sont montées respectivement sur le deuxième chariot 114A2 et sur le premier chariot 114A1, par exemple par clipsage ou emmanchement à force, et traversent chacune axialement l'autre chariot. Les têtes avec leurs chariots respectifs sont montées tête-bêche. Elles s'étendent ainsi, une fois montées au sein du dispositif manuel 100, sur une portion axiale commune du dispositif manuel 100.

La troisième partie de carter 112C est couplée en rotation autour de la direction axiale X avec la première partie 112A, dans cet exemple grâce à des nervures axiale 112C1 de la troisième partie 112C engagées dans des rainures axiales 112A1 de la première partie 112C. Par ailleurs, de manière similaire au premier mode de réalisation, la première partie 112A (et donc aussi la troisième partie 112C) est libre en rotation autour de la direction axiale X par rapport à la deuxième partie 1128, grâce à un système de clipsage de reliefs (non représentés) de la première partie 112A avec des nervures annulaires 112B1 de la deuxième partie 112B.

La première partie 112A présente sur sa paroi intérieure le premier chemin de came hélicoïdal 114C1 tandis que l'extrémité axiale de la troisième partie 112C en regard du premier chemin de came 114C1 forme le deuxième chemin de came hélicoïdal 114C2. Dans cet exemple, le premier chemin de came 114C1 forme un épaulement axial en regard de la deuxième extrémité distale 12-2 tandis que le deuxième chemin de came 114C2 forme un épaulement axial en regard de la première extrémité distale 12-1.

Le premier chariot 114A1 et le deuxième chariot 114A2 portent respectivement une première came 114A11 et 114A21 coopérant respectivement avec le premier chemin de came 114C1 et le deuxième chemin de came 114C2. Le ressort 114B est un ressort hélicoïdal de compression qui s'étend axialement entre le premier chariot 114A1 et le deuxième chariot 114A2, et qui est comprimé entre le premier chariot 114A1 et le deuxième chariot 114A2. Ainsi, le ressort 114B pousse chaque chariot, et plus particulièrement la came de chaque chariot, contre le chemin de came correspondant. Ainsi, le mouvement dans un sens axial d'un chariot, imposé par son chemin de came est répercuté sur l'autres chariot via le ressort, et inversement. Les deux chemins de cames 114C1 et 114C2 étant parallèles, on s'assure ainsi que les deux chariots 114A1 et 114A2 se déplacent axialement de concert. On note que les premier et deuxième chariots 114A1 et 114A2 sont couplés en rotation avec la deuxième partie de carter 112B dans cet exemple grâce à la rainure axiale 112B2 de la deuxième partie 112B qui reçoit en coulissement axial les cames 114A11 et 114A21, et aux nervures axiales 112B3 de la deuxième partie 112B engagés dans les rainures axiales 114A12 et 114A22 des premier et deuxième chariots 114A1 et 114A2. Ainsi, on s'assure que les deux chariots 114A1 et 114A2 suivent leur chemin de came respectif, en rotation autour de la direction axiale X, de concert.

On note que dans cet exemple, le ressort 114B est emmanché autour de la première tête 16A. Un tel montage permet d'optimiser l'encombrement du mécanisme 114, les appuis du ressort 1148, et d'assurer une grande fiabilité de l'alignement axiale du ressort 114B avec les premier et deuxième chariots 114A1 et 114A2.

Ainsi, de manière similaire au premier mode de réalisation, les chemins de came 114C1 et 114C2 formant chacun une boucle fermée, en faisant tourner la premier partie de carter 112A par rapport à la deuxième partie de concert 112B, on fait passer successivement la première tête 16A de la position escamotée à la position d'utilisation et, simultanément, la deuxième tête 16B de la position d'utilisation à la position escamotée, et ce en passant par une position neutre où les deux têtes sont escamotées.

De manière similaire au premier mode de réalisation, la deuxième partie de carter 112B présente un bouton radial 18 qui est aligné avec un bouton poussoir 16B1 (non représenté sur les figures 3 et 4) de la deuxième tête 16B uniquement lorsque la deuxième tête 16B est en position d'utilisation.

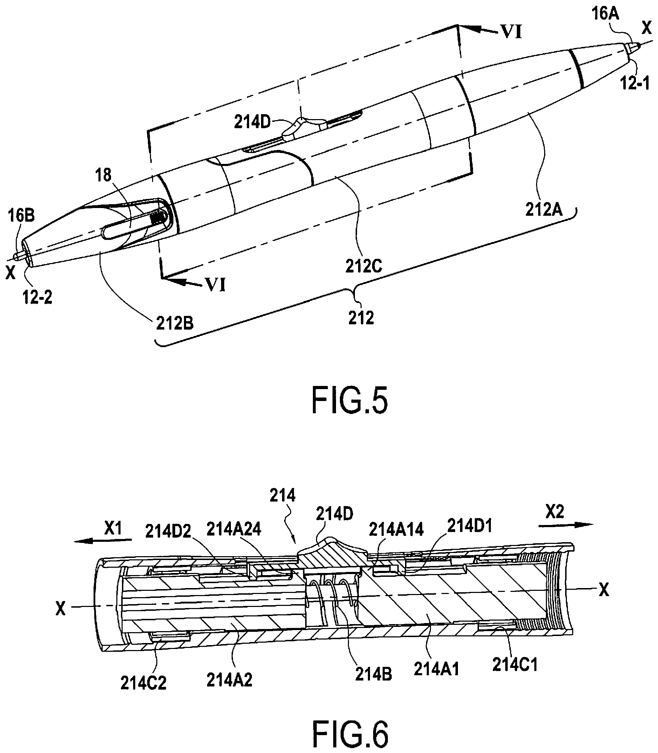

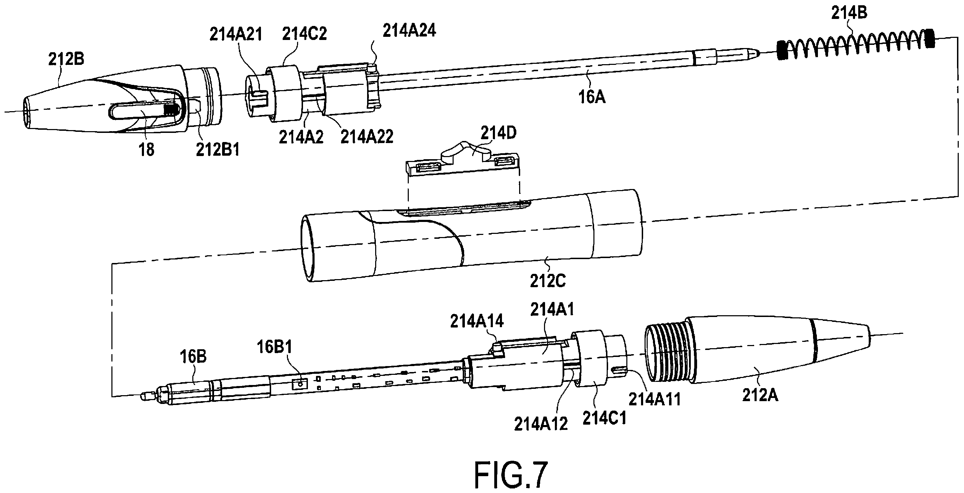

Un dispositif manuel 200 selon un troisième mode de réalisation est décrit en référence aux figures 5, 6 et 7. Ce troisième mode de réalisation de dispositif manuel 200 est similaire au deuxième mode de réalisation de dispositif manuel 100, et diffère uniquement en ce que l'unique mécanisme comprend deux bagues dentées formant cames rotatives au lieu de chemins de came hélicoïdaux, et en ce que le carter présente une structure différente. Les éléments en commun entre les premier, deuxième et troisième modes de réalisation présentent le même signe de référence et ne sont pas décrits à nouveau.

Sur la figure 5, la première tête 16A et la deuxième tête 16B sont en position d'utilisation. Le carter 212 comprend dans cet exemple trois parties, à savoir une première partie 212A, une deuxième partie 212B et une troisième partie 212C disposée selon la direction axiale entre la première partie 212A et la deuxième partie 212B. L'unique mécanisme 214 comprend un premier chariot 214A1, un deuxième chariot 214A2, un unique ressort 2148, une première et une deuxième bague dentée formant came rotative 214C1 et 214C2, et un unique bouton latéral 214D (i.e. disposé sur une face latérale du carter s'étendant selon la direction axiale X).

La première partie de carter 212A est montée par vissage sur un premier côté axial de la troisième partie de carter 212C tandis que la deuxième partie 2128 et monté par clipsage sur un deuxième côté axiale de la troisième partie de carter 212C, opposé selon la direction axiale au premier côté axial. Un détrompeur 212B1 de la deuxième partie 212B coopère avec une partie complémentaire non représentée de la troisième partie 212C, grâce à quoi on assure un positionnement correct de la deuxième partie 212B par rapport à la troisième partie 212C et un alignement selon la direction circonférentielle du bouton radial 18 de la deuxième partie 212B avec un bouton poussoir 16B1.

La première tête 16A et la deuxième tête 16B sont montées traversantes respectivement sur le deuxième chariot 114A2 et sur le premier chariot 14A1, par exemple par clipsage ou emmanchement à force, et traversent chacune axialement l'autre chariot. Les têtes avec leurs chariots respectifs sont montées tête- bêche. Elles s'étendent ainsi, une fois montées au sein du dispositif manuel 200, sur une portion axiale commune du dispositif manuel 200.

La première bague 214C1 est emmanchée autour du premier chariot 214A1 et est bloquée axialement au sein du carter 212 par des épaulements de la première partie 212A et de la troisième partie 212C. De même, la deuxième bague 214C2 est emmanchée autour du deuxième chariot 214A2 et est bloquée axialement au sein du carter 212 par des épaulements de la deuxième partie 212B et de la troisième partie 212C. Les dents (non représentées) de la première bague 214C1, disposées à l'intérieur de la première bague 214C1, coopèrent avec des dents 214A11 et 214A12 du premier chariot 214A1, bloquant ainsi alternativement le premier chariot 214A1 à deux positions axiales distinctes. De même, les dents (non représentées) de la deuxième bague 214C2, disposées à l'intérieur de la deuxième bague 214C2, coopèrent avec des dents 214A21 et 214A22 du deuxième chariot 214A2, bloquant ainsi alternativement le deuxième chariot 214A2 à deux positions axiales distinctes.

Le ressort 214B est un ressort hélicoïdal de compression qui s'étend axialement entre le premier chariot 214A1 et le deuxième chariot 214A2, et qui est comprimé entre le premier chariot 214A1 et le deuxième chariot 214A2. Ainsi, le ressort 114B pousse chaque chariot, et plus particulièrement les dents 214A12 et 214A21 respectivement vers les première et deuxième bagues 214C1 et 214C2, et plus particulièrement vers les dents des première et deuxième bagues 214C1 et 214C2. Ainsi, le mouvement dans un premier sens axial d'un chariot, est bloqué par l'autre chariot via le ressort tandis que le mouvement axial dans un deuxième sens axial, opposé au premier sens axial, du même chariot est bloqué par la bague correspondante, et inversement.

On note que dans cet exemple, le ressort 214B est emmanché autour de la première tête 16A. Un tel montage permet d'optimiser l'encombrement du mécanisme 214, les appuis du ressort 214, et d'assurer une grande fiabilité de l'alignement axiale du ressort 214B avec les premier et deuxième chariots 214A1 et 214A2.

Le premier et le deuxième chariot 214A1 et 214A2 présentent chacun une saillie radiale 214A14 et 214A24 coopérant avec le bouton 214D. Le bouton 214D présente un premier épaulement axial 214D1 configuré pour coopérer en butée dans un premier sens axial X1 avec la saillie radiale 214A14 et un deuxième épaulement axial 214D2 configuré pour coopérer en butée dans un deuxième sens axial X2, opposé au premier sens axial X1, avec la saillie radiale 214A24. Le bouton 214D est ainsi configuré pour entraîner le premier chariot 214A1 en translation dans le premier sens axial X1 tandis que le ressort 214B tend à entraîner le premier chariot 214A1 en translation dans le second sens axial X2. Le bouton 214D est également ainsi configuré pour entraîner le deuxième chariot 214A2 en translation dans le deuxième sens axial X2 tandis que le ressort 214B tend à entraîner le deuxième chariot 214A2 en translation dans le premier sens axial X1. On note que les premier et deuxième chariots 214A1 et 214A2 sont bloqués en rotation autour de la direction axiale X en coopérant avec la troisième partie via un système de nervures/rainures non représenté.

Ainsi, en déplaçant le bouton 214D dans le premier sens axial X1 on déplace le premier chariot 214A1 dans le premier sens axial X1 (avec un mouvement de retour dans le deuxième sens axial X2 grâce au ressort 214B), grâce à quoi les dents 214A11 et 214A12 coopèrent avec les dents de la première bague 214C1, et on fait passer la deuxième tête 16B de la position escamotée à la position d'utilisation ou inversement. De manière similaire, en déplaçant le bouton 214D dans le deuxième sens axial X2 on déplace le deuxième chariot 214A2 dans le premier sens axial X2 (avec un mouvement de retour dans le premier sens axial X1 grâce au ressort 214B), grâce à quoi les dents 214A21 et 214A22 coopèrent avec les dents de la deuxième bague 214C1, et on fait passer la première tête 16A de la position escamotée à la position d'utilisation ou inversement.

De manière similaire aux premier et deuxième modes de réalisation, le bouton radial 18 est aligné avec le bouton poussoir 16B1 de la deuxième tête 16B uniquement lorsque la deuxième tête 16B est en position d'utilisation.

On note que contrairement aux premier et deuxième modes de réalisation où les chariots, et donc les têtes, sont déplacés axialement de concert, dans le troisième mode de réalisation les déplacements axiaux des chariots, et donc des têtes, sont indépendants, grâce à quoi chaque tête peut prendre la position escamotée ou d'utilisation indépendamment l'une de l'autre. Ainsi, dans les premier et deuxième modes de réalisation lorsqu'une tête est en position d'utilisation l'autre tête est en position escamotée, tandis que dans le troisième mode de réalisation, les deux têtes peuvent être simultanément en position d'utilisation, seul une des deux tête peut être en position d'utilisation tandis que l'autre tête en en position escamotée, ou encore les deux tête peuvent être simultanément en position escamotée (cette dernière configuration étant également possible avec les premier et deuxième modes de réalisation).

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Dispositif manuel (200), notamment dispositif manuel d'écriture, s'étendant selon une direction axiale (X), comprenant un carter (212) présentant une première extrémité distale (12-1) et une deuxième extrémité distale (12-2) opposée à la première extrémité distale (12-1) selon la direction axiale (X), une première tête (16A) mobile axialement entre une position d'utilisation dans laquelle la première tête (16A) fait saillie du carter (212) depuis la première extrémité (12-1) et une position escamotée dans laquelle la première tête (16A) est escamotée dans le carter (212), une deuxième tête (16B) mobile axialement entre une position d'utilisation dans laquelle la deuxième tête (16B) fait saillie du carter (212) depuis la deuxième extrémité (12-2) et une position escamotée dans laquelle la deuxième tête (16B) est escamotée dans le carter (212), et un unique mécanisme (214) configuré pour amener la première tête (16A) et la deuxième tête (16B) depuis la position escamotée à la position d'utilisation et vice versa, le mécanisme (214) comprenant deux chariots (214A1, 214A2) portant au moins une tête parmi la première tête et la deuxième tête (16A, 16B) et un unique ressort (214B), la première tête (16A) et la deuxième tête (16B) s'étendant chacune en partie sur une portion axiale commune du dispositif manuel, le ressort (214B) s'étendant axialement entre les deux chariots (214A1, 214A2) et coopérant avec les deux chariots (214A1, 214A2), dans lequel le mécanisme (214) comprend un unique bouton latéral (214D), dans lequel le bouton (214D) coopère avec chacun des deux chariots (214A1, 214A2), **caractérisé en ce que** le bouton (214D) est configuré pour entraîner un premier chariot (214A1) parmi les deux chariots, en translation dans un premier sens axial (X1) tandis que le ressort (214D) tend à entraîner le premier chariot (214A1) en translation dans un second sens axial (X2), opposé au premier sens axial (X1), et le bouton (214D) est configuré pour entraîner le deuxième chariot (214A2) parmi les deux chariots, en translation dans le deuxième sens axial (X2) tandis que le ressort (214D) tend à entraîner le deuxième chariot (214A2) en translation dans le premier sens axial (X1).

2. Dispositif manuel (200) selon la revendication 1, dans lequel le mécanisme (214) comprend au moins une bague dentée formant came rotative (214C1, 214C2) coopérant avec le au moins un chariot (214A1, 214A2).

3. Dispositif manuel (200) selon la revendication 1 ou 2, dans lequel la première tête (16A) est un corps d'écriture tandis que la deuxième tête (16B) est un élément configuré pour coopérer avec un écran tactile.

4. Dispositif manuel (200) selon la revendication 3 comprenant un bouton (18) configuré pour coopérer avec l'élément configuré pour coopérer avec un écran tactile (16B) uniquement lorsque ledit élément (16B) est en position d'utilisation.

## Patentansprüche

1. Manuelle Vorrichtung (200), insbesondere eine manuelle Schreibvorrichtung, die sich gemäß einer axialen Richtung (X) erstreckt, umfassend ein Gehäuse (212), das ein erstes distales Ende (12-1) und ein zweites distales Ende (12-2) aufweist, das dem ersten distalen Ende (12-1) gemäß der axialen Richtung (X) entgegengesetzt ist, einen ersten Kopf (16A), der zwischen einer Gebrauchsposition, in der der erste Kopf (16A) aus dem Gehäuse (212) von dem ersten Ende (12-1) vorsteht, und einer eingefahrenen Position axial bewegbar ist, in der der erste Kopf (16A) in das Gehäuse (212) eingefahren ist, einen zweiten Kopf (16B), der zwischen einer Gebrauchsposition, in der der zweite Kopf (16B) aus dem Gehäuse (212) von dem zweiten Ende (12-2) vorsteht, und einer eingefahrenen Position axial bewegbar ist, in der der zweite Kopf (16B) in das Gehäuse (212) eingefahren ist, und einen einzigen Mechanismus (214), der zum Leiten des ersten Kopfs (16A) und des zweiten Kopfs (16B) von der eingefahrenen Position in die Gebrauchsposition und umgekehrt konfiguriert ist, der Mechanismus (214) umfassend zwei Schlitten (214A1, 214A2), die mindestens einen Kopf unter dem ersten Kopf und dem zweiten Kopf (16A, 16B) tragen, und eine einzige Feder (214B), wobei sich der erste Kopf (16A) und der zweite Kopf (16B) jeweils teilweise auf einem gemeinsamen axialen Abschnitt der manuellen Vorrichtung erstrecken, wobei sich die Feder (214B) zwischen den zwei Schlitten (214A1, 214A2) axial erstreckt und mit den zwei Schlitten (214A1, 214A2) zusammenwirkt, wobei der Mechanismus (214) einen einzigen seitlichen Knopf (214D) umfasst, wobei der Knopf (214D) mit jedem der zwei Schlitten (214A1, 214A2) zusammenwirkt, **dadurch gekennzeichnet, dass** der Knopf (214D) zum Treiben eines ersten Schlittens (214A1) unter den zwei Schlitten in Verschiebung in eine erste axiale Richtung (X1) konfiguriert ist, wohingegen die Feder (214D) dazu neigt, den ersten Schlitten (214A1) in Verschiebung in eine zweite axiale Richtung (X2) zu treiben, die der ersten axialen Richtung (X1) entgegengesetzt ist, und der Knopf (214D) zum Treiben des zweiten Schlittens (214A2) unter den zwei Schlitten in Verschiebung in die zweite axiale Richtung (X2) konfiguriert ist, wohingegen die Feder (214D) dazu neigt, den zweiten Schlitten (214A2) in Verschiebung in die erste axiale Richtung (X1) zu treiben.

2. Manuelle Vorrichtung (200) nach Anspruch 1, wobei der Mechanismus (214) mindestens einen Zahnring umfasst, der einen Drehnocken (214C1, 214C2) ausbildet, der mit dem mindestens einen Schlitten (214A1, 214A2) zusammenwirkt.

3. Manuelle Vorrichtung (200) nach Anspruch 1 oder 2, wobei der erste Kopf (16A) ein Schreibkörper ist, wohingegen der zweite Kopf (16B) ein Element ist, das zum Zusammenwirken mit einem Berührungsbildschirm konfiguriert ist.

4. Manuelle Vorrichtung (200) nach Anspruch 3, umfassend einen Knopf (18), der zum Zusammenwirken mit dem Element konfiguriert ist, das zum Zusammenwirken mit einem Berührungsbildschirm (16B) nur dann konfiguriert ist, wenn sich das Element (16B) in der Gebrauchsposition befindet.

## Claims

1. Manual device (200), in particular manual writing device, which extends in an axial direction (X) and comprises a housing (212) having a first distal end (12-1) and a second distal end (12-2) opposite the first distal end (12-1) in the axial direction (X), a first head (16A) which is axially movable between a position of use in which the first head (16A) protrudes from the housing (212) from the first end (12-1) and a retracted position in which the first head (16A) is retracted into the housing (212), a second head (16B) which is axially movable between a position of use in which the second head (16B) protrudes from the housing (212) from the second end (12-2) and a retracted position in which the second head (16B) is retracted into the housing (212), and a single mechanism (214) which is configured to bring the first head (16A) and the second head (16B) from the retracted position to the position of use and vice versa, the mechanism (214) comprising two carriages (214A1, 214A2) which support at least one head among the first head and the second head (16A, 16B) and a single spring (214B), the first head (16A) and the second head (16B) each partially extending over a common axial portion of the manual device, the spring (214B) axially extending between the two carriages (214A1, 214A2) and engaging with the two carriages (214A1, 214A2), the mechanism (214) comprising a single lateral button (214D), the button (214D) engaging with each of the two carriages (214A1, 214A2), **characterized in that** the button (214D) is configured to drive a first carriage (214A1) among the two carriages in translation in a first axial direction (X1) while the spring (214D) aims to drive the first carriage (214A1) in translation in a second axial direction (X2) opposite to the first axial direction (X1), and the button (214D) is configured to drive the second carriage (214A2) among the two carriages in translation in the second axial direction (X2) while the spring (214D) aims to drive the second carriage (214A2) in translation in the first axial direction (X1).

2. Manual device (200) according to claim 1, wherein the mechanism (214) comprises at least one toothed ring which forms a rotary cam (214C1, 214C2) that engages with the at least one carriage (214A1, 214A2).

3. Manual device (200) according to either claim 1 or claim 2, wherein the first head (16A) is a writing body while the second head (16B) is an element which is configured to engage with a touchscreen.

4. Manual device (200) according to claim 3 comprising a button (18) which is configured to engage with the element that is configured to engage with a touchscreen (16B) only when said element (16B) is in the position of use.
